# EUROPEAN PATENT SPECIFICATION

(11) **EP 2 340 954 B1**
(45) Date of publication and mention of the grant of the patent: **14.11.2018**
(21) Application number: 10197012.7
(22) Date of filing: 24.12.2010
(51) Int. Cl.: B60K 7/00, B60K 6/52, B60K 6/442, B60K 17/04, B60K 6/448

(54) **Individual-powered dual CVT differential system with stabilizing device**
Einzeln-angetriebenes duales stufenloses Drehmomentwandlungsdifferentialsystem mit Stabilisierungsvorrichtung
Système différentiel double CVT à alimentation individuelle avec dispositif de stabilisation

(30) Priority: 28.12.2009 US 654643; 25.03.2010 US 659920
(43) Date of publication of application: 06.07.2011
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- JP-A- S61 257 331
- US-A- 1 984 830
- US-A1- 2006 037 792

## Description

### BACKGROUND OF THE INVENTION

### (a) Field of the invention

The present invention relates to two or more than two independent motors installed at the common load, through speed ratio variation made by the CVT individually installed between the individual motor and the individual driven load, to match the differential speed operation drive between the loads driven by individual motor, in which the stabilizing device constituted by the torque limited coupling device with sliding damping during sliding is installed between the loads individually driven by the two CVTs, the stabilizing device synchronously operates when the torque transmitted between the two loads operates within the limited torque range, and the stabilizing device differentially operates to produce sliding damping to stabilize the operation of the drive system when the torque transmitted between the two loads exceeds the limited torque range.

### (b) Description of the Prior Art

Traditionally, when two or more loads installed at the common load are driven through differential speed regulation by a single motor, the differential speed function is often achieved by differential wheel group, which has shortcomings including transmission efficiency loss, space used, and weight; if a vehicle is driven by dual motors, two independent drive circuits are often installed, and the central control unit refers to the following parameters, such as vehicle speed, output rotational speed detection device, steeling wheel shift values, as well as the road gradient, the center of gravity in the vehicle after load, and processes for controlling the two independent drive circuits, and then the two independent drive circuits respectively drive the two motors to make close loop or semi-close loop rotational speed control between the two motors for achieving differential speed function, but it has shortcomings including high cost and complex system operation.

US2006/0037792 discloses a vehicle with individual, electric wheels and drive trains, in which motors are located outside the drive wheels to which they are coupled using a linking transmission. The vehicle also comprises a clutch with a shiftable differential lock.

### SUMMARY OF THE INVENTION

The present invention relates to a multi-motor driving system for driving a common load body comprising a first motor arranged to drive a first wheel, a first continuously variable transmission disposed between the first motor and the first wheel, a second motor arranged to drive a second wheel, a second continuously variable transmission disposed between the second motor and the second wheel, and a torque limited coupling device disposed between the first a second wheels wherein the first wheel and the second wheel are capable of being driven at different speeds and the torque limited couple device has the function of setting the coupling torque between the first wheel and the second wheel and producing sliding damping if it exceeds a set value.

### BRIEF DESCRIPTION OF THE DRAWINGS

Fig. 1 is a schematic view showing an embodiment of the individual-powered dual CVT differential system with stabilizing device;
Fig. 2 is a schematic view showing an embodiment of the individual-powered dual CVT differential system with stabilizing device in Fig. 1 to be additionally installed with clutch units;
Fig. 3 is a schematic view showing an embodiment of two sets of the individual-powered dual CVT differential systems with stabilizing device in Fig. 1 to be installed at a four-wheel drive common load body L200;
Fig. 4 is a schematic view showing an embodiment of the system in Fig. 3 to be additionally installed with clutch units;

### DESCRIPTION OF MAIN COMPONENT SYMBOLS

CCU100, CCU200, CCU300, CCU400: Central control unit
CL100, CL200, CL300, CL400: Clutch unit
CVT100, CVT200, CVT300, CVT400: Continuous variable transmission
ECU100, ECU200, ECU300, ECU400: Electric control unit
EMU100: Electric energy management unit
ESD100: Electric storage-discharge unit
FC100: Fuel control unit
G100: Generator
ICE100: Engine
L100, L200, L300, L400: Common load body
M100, M200, M300, M400: Motor
MI100, MI200, MI300, MI400: User interface
SD100: Engine speed detecting device
SDT100, SDT200: Stabilizing device
T100, T200, T300, T301, T400: Transmission
TANK100: Tank
W100, W200, W300, W301, W400, W401: Wheel group

### DETAILED DESCRIPTION OF THE PREFERRED EMBODIMENTS

The present invention relates to a multi-motor driving common load, such as two or more motors, in which the CVT is installed between individual motor and a wheel group at individual load, when the multi-motor with two or more than two motors installed at the common load structure individually drives the individual load through the arranged CVT to get rotational speed difference, and to make differential speed drive operation through the speed ratio variation by the CVT, and the stabilizing device constituted by the torque limited coupling device with sliding damping during sliding is installed between the loads individually driven by the two CVTs, during driving operation, if the loads individually driven by the two CVTs vary, or if the response time of the clutch unit at the loads individually driven by the two CVTs is slower, or if the two clutch units operate unstably because of the synchronous response time difference thereof, the stabilizing device installed between the loads operates to stabilize the system.

The CVT in the present invention is a continuous variable transmission, which can automatically change the speed ratio with the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission.

The common load in the present invention refers to the wheel-type vehicle, tracked vehicle, rail vehicle, or ship driven by at least two independent motors installed, or conveyor for stream of people or logistics, or industrial equipment driven by at least two motors; the common load may be further equipped with the engine power system, free wheel, and related operational interface unit.

The various embodiments of the present invention are described as following.

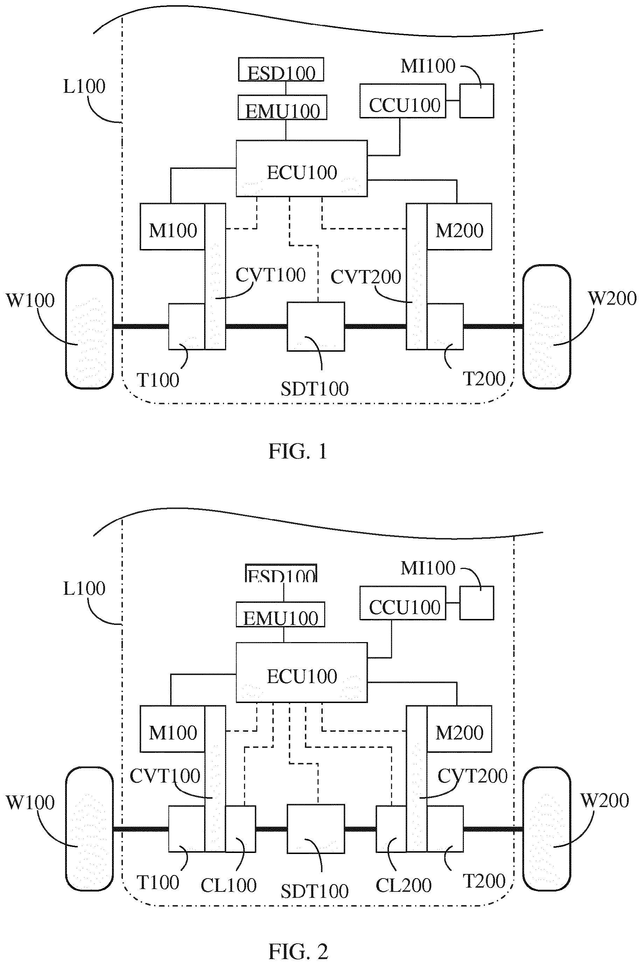

Fig. 1 is a schematic view showing an embodiment of the individual-powered dual CVT differential system with stabilizing device.

As shown in Fig. 1, the structure is as following, in which, for the common load body L100, the motor M100 is installed to drive the wheel group W100 placed at the load through the continuous variable transmission CVT100 and the transmission T100, and the motor M200 is installed to drive the wheel group W200 placed at the load through the continuous variable transmission CVT200 and the transmission T200, and the stabilizing device constituted by the torque limited coupling device with sliding damping during sliding is installed between the loads individually driven by the two CVTs of the motors, if the wheel group W100 and the wheel group W200 placed at the load are driven with speed differential, the continuous variable transmission CVT100 and the continuous variable transmission CVT200 automatically regulate the speed ratio with the load variation to coordinate with rotation differential between the wheel group W100 and the wheel group W200 at the load, and the stabilizing device stabilizes the operation between the loads individually driven by the two CVTs, in which:
-- motors M100, M200: constituted by rotary motors, which are AC or DC, brushless or brush, synchronous or non-synchronous, internal or external rotation type;
-- continuous variable transmissions CVT100, CVT200: related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission;
-- stabilizing device SDT100: constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions CVT100 and CVT200, if unstable operation is caused by the varied load at individual load side during driving operation, the stabilizing device SDT100 installed between the loads operates to stabilize the system;
-- transmission T100: related to fixed speed ratio, variable speed ratio, or stepless speed variable transmission, which is constituted by mechanical gear unit, sprocket unit, pulley unit, or linkage group; and the transmission is selectable as needed;
-- electric control unit ECU100: constituted by the electric machine and/or the solid state power element, and/or the electronic element, and/or the microprocessor, and/or related software, for receiving the control of the user interface MI100 and/or the central control unit CCU100, wherein a motor drive control circuit is installed within the electric control unit ECU100 for manipulating rotational speed, torque, rotary direction, and current of the parallel connected motors M100 and M200; or motor drive control circuits individually equipped to the motors M100 and M200 are individually installed within the electric control unit ECU100 for individually manipulating rotational speed, torque, rotary direction, and current of the motors M100 and M200, which do not involve the close loop or semi- close loop rotational speed control between the two motors to achieve the speed differential function; the speed differential operation between the loads is through the continuous variable transmission installed between the individual motor and the load to perform speed difference regulation;
   if the continuous variable transmission which changes the speed ratio by receiving external manipulation is adopted by the system, the electric control unit ECU100 includes the drive control circuit of the continuous variable transmission with the user interface MI100 for accepting manual manipulation and/or controlled by the central control unit CCU100;
-- electric energy management unit EMU100: constituted by the electric machine, and/or solid state power element, and/or electronic element, and/or microprocessor, and/or related software, for controlling the output voltage, the current and the charging voltage and current of the electric storage-discharge unit ESD100, to start and stop the timing of charging;
-- central control unit CCU100: related to analog or digital, or both mixed control device, constituted by the electric machine and/or solid state power element, and/or including microprocessor, and/or control software, and/or related circuit element, for following the command of the user interface MI100, and/or for setting control mode to further control the operation of the system;
-- user interface MI100: related to linear analog or digital, or both mixed control device, constituted by the operating mechanism, and/or the electric machine, and/or the solid state circuit, for linking with the central control unit CCU100 to control the operation of the system;
-- electric storage-discharge unit ESD100: constituted by various rechargeable secondary battery, or capacitor, or super capacitor.

Through the operation of the above device, if the common load body L100 is driven for operation, and the wheel group W100 and the wheel group W200 at the loads operate at differential speed, , the speed ratio is individually regulated with the load variation of the wheel group W100 and the wheel group W200 installed at the load, to facilitate the speed differential operation drive between the wheel group W100 and the second wheel group W200 installed at the load, and the stabilizing device SDT100 stabilizes the operation between the loads individually driven by the continuous variable transmission CVT100 and the continuous variable transmission CVT200.

In addition, for the embodiment shown in Fig. 1, except for directly driving the load through CVT, or driving the load through CVT and the transmission, furthermore, the clutch unit CL100 is additionally installed between the continuous variable transmission CVT100 and the transmission T100, and the clutch unit CL200 is additionally installed between the continuous variable transmission CVT200 and the transmission T200. Fig. 2 is a schematic view showing an embodiment of the individual-powered dual CVT differential system with stabilizing device in Fig. 1 to be additionally installed with clutch units.

The clutch units CL100 and CL200 installed between the continuous variable transmission CVT100 and the transmission T100, and between the continuous variable transmission CVT200 and the transmission T200 are used to individually control the linking transmission or cutting separation between the continuous variable transmission CVT100 and the transmission T100, and between the continuous variable transmission CVT200 and the transmission T200;

As shown in Fig. 2, in which:
-- clutch units CL100, CL200: related to the clutch device or structure with the function of linking transmission or cutting separation, which is driven by manpower, and/or electricity, and/or magnetic power, and/or machine power, and/or gas pressure, and/or liquid pressure, and/or centrifugal force, and which has the rotary input side and the rotary output side;
-- stabilizing device SDT100: constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units CL100 and CL200 individually driven by the continuous variable transmissions CVT100 and CVT200, during driving operation, if the load at individual load side varies, or if the response time of the clutch units CL100 and CL200 at the loads individually driven by the continuous variable transmissions CVT100 and CVT200 is slower, or if the clutch units CL100 and CL200 operate unstably because of the synchronous response time difference thereof, the stabilizing device SDT100 installed between the loads of the clutch units CL100 and CL200 operates to stabilize the system;

For the individual-powered dual CVT differential system with stabilizing device, two or more than two sets of the individual-powered dual CVT differential systems with stabilizing device are further applied to the four- or more-wheel drive system.

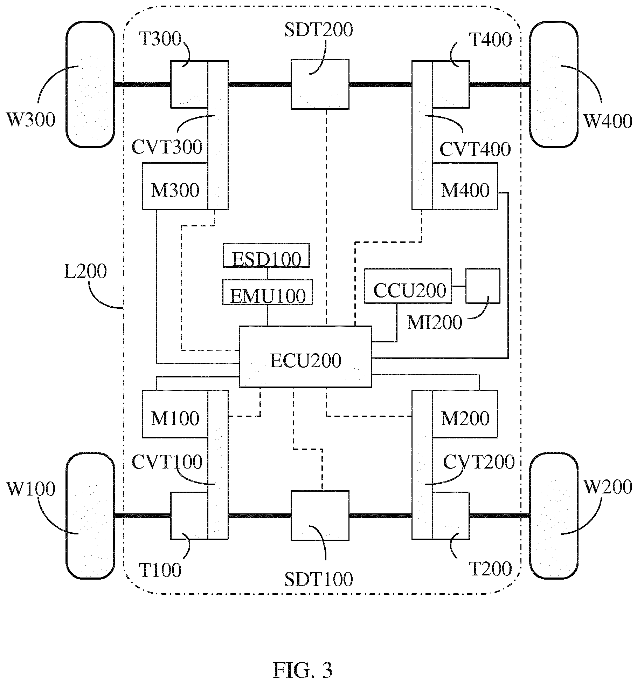

Fig. 3 is a schematic view showing an embodiment of two sets of the individual-powered dual CVT differential systems with stabilizing device in Fig. 1 to be installed at a four-wheel drive common load body L200.

As shown in Fig. 3, the main components include:
-- common load body L200: the common load body L200 is installed with two sets of the individual-powered dual CVT differential systems with stabilizing device, in which the first set of the individual-powered dual CVT differential system with stabilizing device is installed at the front end of the common load body L200, and the second set of the individual-powered dual CVT differential system with stabilizing device is installed at the rear end of the common load body L200, wherein:
   the first set of the individual-powered dual CVT differential system with stabilizing device includes:
   -- motors M100, M200: constituted by rotary motors, which are AC or DC, brushless or brush, synchronous or non-synchronous, internal or external rotation type;
   -- continuous variable transmissions CVT100, CVT200: related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission; and
   -- stabilizing device SDT100: constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions CVT100 and CVT200, if unstable operation is caused by the varied load at individual load side during driving operation, the stabilizing device SDT100 installed between the loads operates to stabilize the system;
   -- transmissions T100, T200: related to fixed speed ratio, variable speed ratio, or stepless speed variable transmissions, which are constituted by mechanical gear units, sprocket units, pulley units, or linkage groups; and the transmissions are selectable as needed;
   the second set of the individual-powered dual CVT differential system with stabilizing device includes:
   -- motors M300, M400: constituted by rotary motors, which are AC or DC, brushless or brush, synchronous or non-synchronous, internal or external rotation type;
   -- continuous variable transmissions CVT300, CVT400: related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission; and
   -- stabilizing device SDT200: constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions CVT300 and CVT400, if unstable operation is caused by the varied load at individual load side during driving operation, the stabilizing device SDT200 installed between the loads operates to stabilize the system;
   -- transmissions T300, T400: related to fixed speed ratio, variable speed ratio, or stepless speed variable transmissions, which are constituted by mechanical gear units, sprocket units, pulley units, or linkage groups;
   -- electric control unit ECU200: constituted by electric machine and/or solid state power element, and/or electronic element, and/or microprocessor, and/or related software, for receiving the control of the user interface MI200 and/or the central control unit CCU200, wherein a motor drive control circuit is installed within the electric control unit ECU200 for manipulating rotational speed, torque, rotary direction, and current of the parallel connected motors M100 and M200, and M300 and M400; or two motor drive control circuits are installed within the electric control unit ECU200, in which one motor drive control circuit is used to control the parallel connected motors M100 and M200, including controlling the rotational speed, torque, rotary direction, and current of the motors M100 and M200, and the other motor drive control circuit is used to control the parallel connected motors M300 and M400, including controlling the rotational speed, torque, rotary direction, and current of the motors M300 and M400; or motor drive control circuits are individually arranged for motors M100, M200, M300, and M400 individually installed within the electric control unit ECU200, for individually manipulating rotational speed, torque, rotary direction, and current of the motors M100, M200, M300, and M400, which do not involve the close loop or semi- close loop rotational speed control between the two motors to achieve the speed differential function; the speed differential operation between the loads is through the continuous variable transmission installed between the individual motor and the load to perform speed difference regulation;
   if the continuous variable transmission which changes the speed ratio by receiving external manipulation is adopted by the system, the electric control unit ECU200 includes the drive control circuit of the continuous variable transmission with the user interface MI200 for accepting manual manipulation and/or controlled by the central control unit CCU200;
   -- electric energy management unit EMU100: constituted by the electric machine, and/or solid state power element, and/or electronic element, and/or microprocessor, and/or related software, for controlling the output voltage, the current and the charging voltage and current of the electric storage-discharge unit ESD100, to start and stop the timing of charging;
   -- central control unit CCU200: related to analog or digital, or both mixed control device, constituted by the electric machine and/or solid state power element, and/or including microprocessor, and/or control software, and/or related circuit element, for following the command of the user interface MI200, and/or for setting control mode and further controlling the operation of the system;
   -- user interface MI200: related to linear analog or digital, or both mixed control device, constituted by the operating mechanism, and/or the electric machine, and/or the solid state circuit, for linking with the central control unit CCU200 to control the operations of the first set of the individual-powered dual CVT differential system with stabilizing device, and the second set of the individual-powered dual CVT differential system with stabilizing device in turn; and
   -- electric storage-discharge unit ESD100: constituted by various rechargeable secondary battery, or capacitor, or super capacitor.

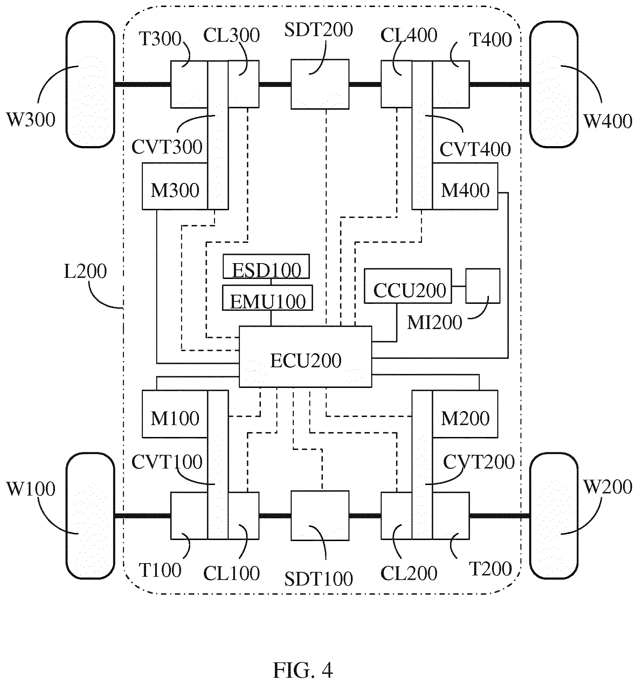

In addition, for the embodiment shown in Fig. 3, except for directly driving the load through CVT, or driving the load through CVT and the transmission, furthermore, the clutch unit CL100 is additionally installed between the continuous variable transmission CVT100 and the transmission T100, and the clutch unit CL200 is additionally installed between the continuous variable transmission CVT200 and the transmission T200, and for the second set of the individual-powered dual CVT differential system with stabilizing device, the clutch unit CL300 is additionally installed between the continuous variable transmission CVT300 and the transmission T300, and the clutch unit CL400 is additionally installed between the continuous variable transmission CVT400 and the transmission T400. Fig. 4 is a schematic view showing an embodiment of the system in Fig. 3 to be additionally installed with clutch units.

The clutch units CL100 and CL200 installed between the continuous variable transmission CVT100 and the transmission T100, and between the continuous variable transmission CVT200 and the transmission T200, are used to individually control the linking transmission or cutting separation between the continuous variable transmission CVT100 and the transmission T100, and between the continuous variable transmission CVT200 and the transmission T200.

The clutch units CL300 and CL400 installed between the continuous variable transmission CVT300 and the transmission T300, and between the continuous variable transmission CVT400 and the transmission T400, are used to individually control the linking transmission or cutting separation between the continuous variable transmission CVT300 and the transmission T300, and between the continuous variable transmission CVT400 and the transmission T400;

As shown in Fig. 4, in which:
-- clutch units CL100, CL200, CL300, CL400: related to the clutch device or structure with the function of linking transmission or cutting separation, which is driven by manpower, and/or electricity, and/or magnetic power, and/or machine power, and/or gas pressure, and/or liquid pressure, and/or centrifugal force, and which has the rotary input side and the rotary output side.
-- stabilizing device SDT100: constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units CL100 and CL200 individually driven by the continuous variable transmissions CVT100 and CVT200, during driving operation, if the load at individual load side varies, or if the response time of the clutch units CL100 and CL200 at the loads individually driven by the continuous variable transmissions CVT100 and CVT200 is slower, or if the clutch units CL100 and CL200 operate unstably because of the synchronous response time difference thereof, the stabilizing device SDT100 installed between the loads of the clutch units CL100 and CL200 operates to stabilize the system.
-- stabilizing device SDT200: constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units CL300 and CL400 individually driven by the continuous variable transmissions CVT300 and CVT400, during driving operation, if the load at individual load side varies, or if the response time of the clutch units CL300 and CL400 at the loads individually driven by the continuous variable transmissions CVT300 and CVT400 is slower, or if the clutch units CL300 and CL400 operate unstably because of the synchronous response time difference thereof, the stabilizing device SDT200 installed between the loads of the clutch units CL300 and CL400 operates to stabilize the system.

The individual-powered dual CVT differential system with stabilizing device is further applied to the hybrid power drive system.

## Claims

1. A multi-motor driving system for driving a common load body (L100) comprising:
a first motor (M100) arranged to drive a first wheel (W100);
a first continuously variable transmission (CVT100) disposed between first motor (M100) and the first wheel (W100);
a second motor (M200) arranged to drive a second wheel (W200);
a second continuously variable transmission (CVT200) disposed between the second motor (M200) and the second wheel (W200); and
a torque limited coupling device (SDT100) disposed between the first and second wheels;
wherein the first wheel (W100) and the second wheel (W200) are capable of being driven at different speeds; and
the torque limited coupling device (SDT100) has the function of setting the coupling torque between the first wheel (W100) and the second wheel (W200), and producing sliding damping if it exceeds a set value.

2. A multi-motor driving system according to claim 1 wherein a first transmission (T100) is disposed between the first continuously variable transmission (CVT100) and the first wheel (W100), and a second transmission (T200) is disposed between the second continuously variable transmission (CVT200) and the second wheel (W200).

3. A multi-motor driving system according to claim 2, further comprising a first clutch unit (CL100) installed between the first continuous variable transmission (CVT100) and the first transmission (T100) and a second clutch unit (CL200) installed between the second continuously variable transmission (CVT200) and the second transmission (T200).

4. A multi-motor driving system according to any of claims 1 to 3, further comprising:
a third motor (M300) arranged to drive a third wheel (W300);
a third continuously variable transmission (CVT300) disposed between the third motor (M300) and the third wheel (W300);
a fourth motor (M400) arranged to drive a fourth wheel (W400);
a fourth continuously variable transmission (CVT400) disposed between the fourth motor (M400) and the fourth wheel (W400); and
a second torque limited coupling device (SDT200) disposed between the third and fourth wheels;
wherein the third wheel (W300) and the fourth wheel (W400) are capable of being driven at different speeds; and
the second torque limited coupling device (SDT200) has the function of setting the coupling torque between the third wheel (W300) and the fourth wheel (W400), and producing sliding damping if it exceeds a set value.

5. A multi-motor driving system according to claim 4 wherein a third transmission (T300) is disposed between the third continuously variable transmission (CVT300) and the third wheel (W300), and a fourth transmission (T400) is disposed between the fourth continuously variable transmission (CVT400) and the fourth wheel (W400)

6. A multi-motor driving system according to claim 5, further comprising a third clutch unit (CL300) installed between the third continuous variable transmission (CVT300) and the third transmission (T300) and a fourth clutch unit (CL400) installed between the fourth continuously variable transmission (CVT400) and the fourth transmission (T400).

7. A multi-motor driving system according to any of claims 1 to 6 wherein an electric control unit (ECU100) acts to manipulate the rotational speed, torque, rotary direction and current of the motors (M100, M200, M300, M400).

8. A multi-motor driving system according to any of claims 1 to 7, wherein the continuously variable transmission may receive external manipulation via a user interface (MI100) and the electric control unit (ECU100).

9. A multi-motor driving system according to any of claims 1 to 8, wherein an electric energy management unit (EMU100) acts to start and stop the charging of an electric storage-discharge unit (ESD100), the electric storage-discharge unit (ESD100) comprising a rechargeable battery, a capacitor, or a super capacitor.

## Patentansprüche

1. Mehrmotoriges Antriebssystem zum Antreiben eines gemeinsamen Lastkörpers (L100), umfassend:
einen ersten Motor (M100), der zum Antreiben eines ersten Rades (W100) angeordnet ist;
ein erstes stufenloses Getriebe (CVT100), das zwischen dem ersten Motor (M100) und dem ersten Rad (W100) angeordnet ist;
einen zweiten Motor (M200), der zum Antreiben, eines zweiten Rades (W200) angeordnet ist;
ein zweites stufenloses Getriebe (CVT200), das zwischen dem zweiten Motor (M200) und dem zweiten Rad (W200) angeordnet ist; und
eine drehmomentbegrenzte Kupplungsvorrichtung (SDT100), die zwischen dem ersten und dem zweiten Rad angeordnet ist;
wobei das erste Rad (W100) und das zweite Rad (W200) in der Lage sind, mit unterschiedlichen Geschwindigkeiten angetrieben zu werden; und
die drehmomentbegrenzte Kupplungsvorrichtung (SDT100) die Funktion hat, das Kupplungsmoment zwischen dem ersten Rad (W100) und dem zweiten Rad (W200) einzustellen und eine Gleitdämpfung zu erzeugen, wenn es einen Einstellwert überschreitet.

2. Mehrmotoriges Antriebssystem nach Anspruch 1, wobei ein erstes Getriebe (T100) zwischen dem ersten stufenlosen Getriebe (CVT100) und dem ersten Rad (W100) und ein zweites Getriebe (T200) zwischen dem zweiten stufenlosen Getriebe (CVT200) und dem zweiten Rad (W200) angeordnet ist.

3. Mehrmotoriges Antriebssystem nach Anspruch 2, ferner umfassend eine erste Kupplungseinheit (CL100), die zwischen dem ersten stufenlosen Getriebe (CVT100) und dem ersten Getriebe (T100) installiert ist, und eine zweiten Kupplungseinheit (CL200), die zwischen dem zweiten stufenlosen Getriebe (CVT200) und dem zweiten Getriebe (T200) installiert ist.

4. Mehrmotoriges Antriebssystem nach einem der Ansprüche 1 bis 3, ferner umfassend:
einen dritten Motor (M300), der zum Antreiben eines dritten Rades (W300) angeordnet ist;
ein drittes stufenloses Getriebe (CVT300), das zwischen dem dritten Motor (M300) und dem dritten Rad (W300) angeordnet ist;
einen vierten Motor (M400), der zum Antreiben eines vierten Rades (W400) angeordnet ist;
ein viertes stufenloses Getriebe (CVT400), das zwischen dem vierten Motor (M400) und dem vierten Rad (W400) angeordnet ist; und
eine zweite drehmomentbegrenzte Kupplungsvorrichtung (SDT200), die zwischen dem dritten und vierten Rad angeordnet ist; wobei
das dritte Rad (W300) und das vierte Rad (W400) geeignet sind, mit unterschiedlichen Drehzahlen angetrieben zu werden; und
die zweite drehmomentbegrenzte Kupplungsvorrichtung (SDT200) die Funktion hat, das Kupplungsmoment zwischen dem dritten Rad (W300) und dem vierten Rad (W400) einzustellen und eine Gleitdämpfung zu erzeugen, wenn es einen Einstellwert überschreitet.

5. Mehrmotoriges Antriebssystem nach Anspruch 4, wobei ein drittes Getriebe (T300) zwischen dem dritten stufenlosen Getriebe (CVT300) und dem dritten Rad (W300) angeordnet ist und ein viertes Getriebe (T400) zwischen dem vierten stufenlosen Getriebe (CVT400) und dem vierten Rad (W400) angeordnet ist.

6. Mehrmotoriges Antriebssystem nach Anspruch 5, ferner umfassend eine dritte Kupplungseinheit (CL300), die zwischen dem dritten stufenlosen Getriebe (CVT300) und dem dritten Getriebe (T300) installiert ist, und eine vierte Kupplungseinheit (CL400), die zwischen dem vierten stufenlosen Getriebe (CVT400) und dem vierten Getriebe (T400) installiert ist.

7. Mehrmotoriges Antriebssystem nach einem der Ansprüche 1 bis 6, wobei eine elektrische Steuereinheit (ECU100) dazu dient, die Drehzahl, das Drehmoment, die Rotationsrichtung und den Strom der Motoren (M100, M200, M300, M400) zu manipulieren.

8. Mehrmotoriges Antriebssystem nach einem der Ansprüche 1 bis 7, wobei das stufenlose Getriebe über eine Benutzerschnittstelle (MI100) und die elektrische Steuereinheit (ECU100) eine externe Manipulation empfangen kann.

9. Mehrmotoriges Antriebssystem nach einem der Ansprüche 1 bis 8, wobei eine elektrische Energiemanagementeinheit (EMU100) dazu dient, den Ladevorgang einer elektrischen Speicherentladeeinheit (ESD100) zu starten und anzuhalten, wobei die elektrische Speicherentladeeinheit (ESD100) eine wiederaufladbare Batterie, einen Kondensator oder einen Superkondensator umfasst.

## Revendications

1. Système d'entraînement à moteurs multiples destiné à l'entraînement d'un corps de charge commun (L100) comprenant :
un premier moteur (M100) agencé pour entraîner une première roue (W100) ;
une première transmission variable de manière continue (CVT100) disposée entre le premier moteur (M100) et la première roue (W100) ;
un deuxième moteur (M200) agencé pour alimenter une deuxième roue (W200) ;
une deuxième transmission variable de manière continue (CVT200) disposée entre le deuxième moteur (M200) et la deuxième roue (W200) ; et
un dispositif d'accouplement à couple limité (SDT100) disposé entre les première et deuxième roues ;
dans lequel la première roue (W100) et la deuxième roue (W200) sont capables d'être entraînées à des vitesses différentes ; et
le dispositif d'accouplement à couple limité (SDT100) comprend la fonction de réglage du couple de serrage entre la première roue (W100) et la deuxième roue (W200), et de production d'amortisseur glissant s'il dépasse une valeur définie.

2. Système d'entraînement à moteurs multiples selon la revendication 1, dans lequel une première transmission (T100) est disposée entre la première transmission variable de manière continue (CVT100) et la première roue (W100), et une deuxième transmission (T200) est disposée entre la deuxième transmission variable de manière continue (CVT200) et la deuxième roue (W200).

3. Système d'entraînement à moteurs multiples selon la revendication 2, comprenant en outre une première unité d'embrayage (CL100) installée entre la première transmission variable de manière continue (CVT100) et la première transmission (T100), et une deuxième unité d'embrayage (CL200) installée entre la deuxième transmission variable de manière continue (CVT200) et la deuxième transmission (T200).

4. Système d'entraînement à moteurs multiples selon l'une quelconque des revendications 1 à 3, comprenant en outre :
un troisième moteur (M300) agencé pour alimenter une troisième roue (W300) ;
une troisième transmission variable de manière continue (CVT300) disposée entre le troisième moteur (M300) et la troisième roue (W300) ;
un quatrième moteur (M400) agencé pour alimenter une quatrième roue (W400) ;
une quatrième transmission variable de manière continue (CVT400) disposée entre le quatrième moteur (M400) et la quatrième roue (W400) ; et
un second dispositif d'accouplement à couple limité (SDT200) disposé entre les troisième et quatrième roues ;
dans lequel la troisième roue (W300) et la quatrième roue (W400) sont capables d'être entraînées à des vitesses différentes ; et
le second dispositif d'accouplement à couple limité (SDT200) comprend la fonction de réglage du couple de serrage entre la troisième roue (W300) et la quatrième roue (W400) et de production d'amortisseur glissant s'il dépasse une valeur définie.

5. Système d'entraînement à moteurs multiples selon la revendication 4, dans lequel une troisième transmission (T300) est disposée entre la troisième transmission variable de manière continue (CVT300) et la troisième roue (W300), et une quatrième transmission (T400) est disposée entre la quatrième transmission variable de manière continue (CVT400) et la quatrième roue (W400).

6. Système d'entraînement à moteurs multiples selon la revendication 5, comprenant en outre une troisième unité d'embrayage (CL300) installée entre la troisième transmission variable de manière continue (CVT300) et la troisième transmission (T300), et une quatrième unité d'embrayage (CL400) installée entre la quatrième transmission variable de manière continue (CVT400) et la quatrième transmission (T400).

7. Système d'entraînement à moteurs multiples selon l'une quelconque des revendications 1 à 6, dans lequel une unité de commande électrique (ECU100) agit de façon à manipuler la vitesse de rotation, le couple, la direction de rotation et le courant des moteurs (M100, M200, M300, M400).

8. Système d'entraînement à moteurs multiples selon l'une quelconque des revendications 1 à 7, dans lequel la transmission variable de manière continue peut recevoir une manipulation externe par l'intermédiaire d'une interface utilisateur (MI100) et de l'unité de commande électrique (ECU100).

9. Système d'entraînement à moteurs multiples selon l'une quelconque des revendications 1 à 8, dans lequel une unité de gestion d'énergie électrique (EMU100) agit de façon à démarrer et à arrêter le chargement d'une unité de stockage-décharge électrique (ESD100), l'unité de stockage-décharge électrique (ESD100) comprenant une batterie rechargeable, un condensateur ou un super condensateur.
